# EUROPEAN PATENT APPLICATION

(11) **EP 2 955 616 A1**
(43) Date of publication of application: **16.12.2015**
(21) Application number: 15171480.5
(22) Date of filing: 10.06.2015
(51) Int. Cl.: G06F 3/0483, G06F 3/0484, G06F 3/0486, G06F 3/0481

(54) **ELECTRONIC DEVICE AND METHOD OF EDITING ICON IN ELECTRONIC DEVICE**

(30) Priority: 10.06.2014 KR 20140070296
(71) Applicant: Samsung Electronics Co., Ltd, Gyeonggi-do 443-742 (KR)
(72) Inventor: Han, Ji-Young, Gyeonggi-do 443-742 (KR); Lee, Ho-Shin, Gyeonggi-do 443-742 (KR); Jin, Jeong-Gyu, Gyeonggi-do 443-742 (KR); Choi, Kyu-Ok, Gyeonggi-do 443-742 (KR); Yi, Sun-Young, Gyeonggi-do 443-742 (KR)
(74) Representative: Nederlandsch Octrooibureau

(57) **Abstract**

An electronic device and a method of editing an icon in an electronic device are provided. The electronic device includes a touch screen configured to display a first icon area, a second icon area, and an icon editing page, and a controller configured to change the first icon area and the second icon area to be displayed in the icon editing page as the changed first icon area and the changed second icon area according to a user's gesture input.

## Description

### TECHNICAL FIELD

The present disclosure relates to an electronic device. More particularly, the present disclosure relates to editing an icon in an electronic device.

### BACKGROUND

With the increase of electronic devices, the need for a user interface providing an intuitive input/output possible is increasing. For example, the electronic devices are evolving from the User Interface (UI) type of the related art to receive information using separate configurations, such as a keyboard, a keypad, a mouse, and the like, to an intuitive UI type to receive information through a direct touch on a screen using a finger or a touchable electronic pen. UI technologies are important because they make it possible for users to use the electronic devices more conveniently and easily.

Electronic devices to which UI technologies are applied have been implemented to perform various functions. As examples of the functions, there are a function for data and voice communication, a function for photographing a photo or a video through a camera, a function for storing voice, a function for reproducing a music file through a speaker system, a function for displaying an image or a video, and the like. Some terminals include additional functions capable of executing games, and other terminals are implemented as multimedia equipment.

As the development of electronic devices, such as smart phones, is accelerated, various applications are being increasingly developed and used, and the electronic devices are being developed to display icons corresponding to the various applications on a screen thereof.

However, a screen of the electronic devices is limited in size, and therefore, it may be difficult to display a large number of application icons on one screen. Accordingly, the electronic devices separately display the application icons on at least one or more pages or areas. Furthermore, by adding/removing the application icons to/from the screen of the electronic devices or moving the application icons on the screen of the electronic devices, users can perform editing, such as adding, deleting, or moving the application icons, on the screen of the electronic devices.

The above information is presented as background information only to assist with an understanding of the present disclosure. No determination has been made, and no assertion is made, as to whether any of the above might be applicable as prior art with regard to the present disclosure.

### SUMMARY

A screen of an electronic device according to the related art may be configured to include a first icon area in which at least one or more first icons are displayed and a second icon area in which at least one or more second icons are displayed and to move the icons in the first icon area to the second icon area or the icons in the second icon area to the first icon area.

However, in the screen of the electronic device according to the related art, sizes or positions of the first and second icon areas, which are fixed areas, cannot be changed, and therefore, when moving the icons in the first icon area to the second icon area or the icons in the second icon area to the first icon area, users may be inconvenienced by a long moving distance.

Aspects of the present disclosure are to address at least the above-mentioned problems and/or disadvantages and to provide at least the advantages described below. Accordingly, an aspect of the present disclosure is to provide an electronic device and a method of editing an icon in the electronic device, which may change sizes and positions of a first icon area and a second icon area.

Another aspect of the present disclosure is to provide an electronic device and a method of editing an icon in the electronic device, which may change sizes or positions of a first icon area and a second icon area in order to easily achieve editing such as adding, moving, and deleting an icon of the first icon area or an icon of the second icon area.

Another aspect of the present disclosure is to provide an electronic device and a method of editing an icon in the electronic device, which, in moving an icon of a first icon area to a second area or an icon of the second icon area to the first icon area, may change sizes or positions of the first icon area and the second icon area such that a moving distance of the icon is shortened.

In accordance with an aspect of the present disclosure, an electronic device is provided. The electronic device includes a touch screen configured to display a first icon area, a second icon area, and an icon editing page, and a controller configured to change the first icon area and the second icon area to be displayed in the icon editing page as the changed first icon area and the changed second icon area.

In accordance with another aspect of the present disclosure, a method of editing an icon in an electronic device is provided. The method includes displaying a first icon area and a second icon area, changing the first icon area and the second icon area according to a user's gesture input, and displaying an icon editing page containing the changed first icon area and the changed second icon area.

As described above, the present disclosure provides an electronic device and a method of editing an icon in the electronic device, which may change sizes and/or positions of a first icon area in which one or more first icons are displayed and a second icon area in which one or more second icons are displayed, thereby easily performing editing such as adding, moving, and deleting the at least one or more first icons and the at least one or more second icons.

For example, when the first icons in the first icon area are moved to the second icon area or the second icons in the second icon area are moved to the first icon area, the sizes and/or the positions of the first icon area and the second icon area are changed in order to make the moving distance of the icons shorter, so that a user can move the icons through a physically short movement distance.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of an electronic device according to an embodiment of the present disclosure;
FIG. 2 is a flowchart illustrating an operation of displaying a first icon area and a second icon area in an electronic device according to an embodiment of the present disclosure;
FIGS. 3A and 3B illustrate an example of a screen for displaying a first icon area and a second icon area according to an embodiment of the present disclosure;
FIG. 4 is a flowchart illustrating an operation of moving an icon according to an embodiment of the present disclosure;
FIGS. 5A, 5B, 5C, 5D, 5E, and 5F illustrate an example of a screen when an icon is moved according to a first embodiment of the present disclosure; and
FIGS. 6A, 6B, 6C, 6D, 6E, and 6F illustrate an example of a screen when an icon is moved according to a second embodiment of the present disclosure.
Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Although the terms including an ordinal number such as first, second, etc. can be used for describing various elements, the structural elements are not restricted by the terms. The terms are only used to distinguish one element from another element. For example, without departing from the scope of the present disclosure, a first structural element may be named a second structural element. Similarly, the second structural element also may be named the first structural element. As used herein, the term "and/or" includes any and all combinations of one or more associated items.

In the description, it should be understood that the terms "include" or "have" indicate existence of a feature, a number, an operation, a structural element, parts, or a combination thereof, and do not previously exclude the existences or probability of addition of one or more another features, numeral, operations, structural elements, parts, or combinations thereof.

Unless defined differently, all terms used herein, which include technical terminologies or scientific terminologies, have the same meaning as that understood by a person skilled in the art to which the present disclosure belongs. It should be interpreted that the terms, which are identical to those defined in general dictionaries, have the meaning identical to that in the context of the related technique. The terms should not be ideally or excessively interpreted as a formal meaning.

According to the various embodiments of the present disclosure, the electronic device may be a device that can display an application icon. For example, the electronic device may include at least one of a smart phone, a tablet personal computer (PC), a mobile phone, a video phone, an e-book reader, a desktop PC, a laptop PC, a netbook computer, a personal digital assistant (PDA), a portable multimedia player (PMP), a Motion Picture Experts Group (MPEG) audio layer 3 (MP3) player, a mobile medical device, a camera, a wearable device, for example, a head-mounted-device (HMD) such as electronic glasses, electronic clothes, an electronic bracelet, an electronic necklace, an electronic appcessory, an electronic tattoo, and a smart watch.

According to various embodiments of the present disclosure, the electronic device may be a smart home appliance that can display an application icon. The smart home appliance as an example of the electronic device may include at least one of, for example, a television (TV), a digital video disk (DVD) player, an audio system, a refrigerator, an air conditioner, a vacuum cleaner, an oven, a microwave oven, a washing machine, an air cleaner, a set-top box, a TV box, e.g., Samsung HomeSync^{™}, Apple TV^{™}, or Google TV^{™}, a game console, an electronic dictionary, an electronic key, a camcorder, and an electronic picture frame.

According to various embodiments of the present disclosure, the electronic device may include at least one of a navigation device and an in-vehicle infotainment device, which can display an application icon.

According to various embodiments of the present disclosure, the electronic device may include at least one of a part of furniture or a building/structure, an electronic board, an electronic signature receiving device, and a projector. The electronic device according to the present disclosure may be a combination of one or more of the aforementioned various devices. Further, it is obvious to those skilled in the art that the electronic device according to the present disclosure is not limited to the aforementioned devices.

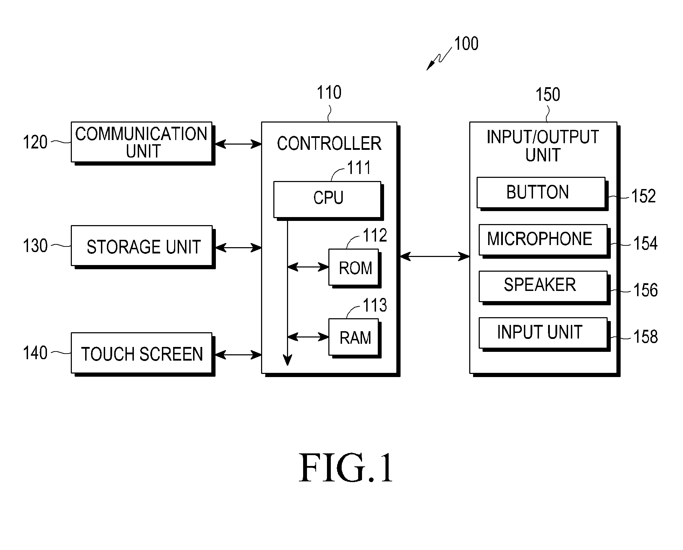

FIG. 1 is a block diagram of an electronic device according to an embodiment of the present disclosure.

Referring to FIG. 1, an electronic device 100 may include a controller 110, a communication unit 120, a storage unit 130, a touch screen 140, and an input/output unit 150.

The controller 110 may include a central processing unit (CPU) 111, a read only memory (ROM) 112, and a random access memory (RAM) 113. Alternatively, the controller 110 may include a digital signal processor (DSP) (not shown). The ROM 112 may store a control program for control of the electronic device 100. The RAM 113 may store signal or data input from the outside of the electronic device 100 or data for tasks performed in the electronic device 100. The CPU 111 may include a single core, a dual core, a triple core, a quad core, or any suitable number of cores. The CPU 111, the ROM 112, and the RAM 113 may be connected with each other through internal buses.

The controller 110 may control the communication unit 120, the storage unit 130, the touch screen 140, and the input/output unit 150. For example, the controller 110 may perform an overall control function for the electronic device 100 and control a signal flow between the elements.

According to an embodiment of the present disclosure, the controller 110 may control the touch screen 140 to display a first icon area including at least one or more first icons and a second icon area including at least one or more second icons. Furthermore, when there is a user's gesture input for the icons included in the first and second icon areas while the first and second icon areas are being displayed, the controller 110 may control the touch screen 140 to change at least one of a size and a position of the first and second icon areas, and may display one page containing the first and second icon areas, of which at least one of the size and the position has been changed.

Furthermore, the controller 110 may make a control to move the icons in the first icon area to the second icon area, or to move the icons in the second icon area to the first icon area according to a user's gesture input on the page containing the first and second icon areas, of which at least one of the size and the position has been changed.

The communication unit 120 may connect the electronic device 100 with an external device. The external device may include a mobile phone (not illustrated), a smart phone (not illustrated), a tablet PC (not illustrated), and a server (not illustrated). Furthermore, the communication unit 120 may connect the electronic device 100 with an external device through mobile communication using at least one antenna, which may be one or a plurality of antennas, (not illustrated) under the control of the controller 110. The communication unit 120 may transmit/receive a wireless signal for a voice call, a video call, a short message service (SMS) or a multimedia messaging service (MMS) to/from a mobile phone (not illustrated) with phone numbers input to the electronic device 100, a smart phone (not illustrated), a tablet PC, or other devices (not illustrated). The communication unit 120 may further include at least one of a wireless local area network (LAN) module (not illustrated) and a short-range communication module (not illustrated). The wireless LAN module may be connected to the Internet under the control of the controller 110 in a place where a wireless access point (AP) (not illustrated) is installed. The wireless LAN module may support the wireless LAN provision, e.g., Institute of Electrical and Electronics Engineers (IEEE) 802.11x. The short-range communication module may wirelessly perform short range communication between the electronic device 100 and an image forming device (not illustrated) under the control of the controller 110. The short-range communication scheme may include Bluetooth, Infrared Data Association (IrDA) communication, or the like. The communication unit 120 may receive an application from an external server under the control of the controller 110.

The storage unit 130 may store signals or data input/output in correspondence to an operation of the communication unit 120, the touch screen 140, and the input/output unit 150 under the control of the controller 110. The storage unit 130 may store a plurality of programs and a plurality of applications for controlling the electronic device 100 or the controller 110, and programs and data for executing various functions. The term "storage unit" may include the ROM 112 within the controller 110, the RAM 113, or a memory card (not illustrated), e.g., a Secure Digital (SD) card and a memory stick, mounted to the electronic device 100. The storage unit 130 may include a non-volatile memory, a volatile memory, a hard disk drive (HDD), or a solid state drive (SSD).

The storage unit 130 may be a medium or device that can be read with a machine, e.g., a computer, and the term 'machine-readable medium' or 'machine-readable device' may be defined as a medium for providing data to the machine so that the machine may perform a specific function. The machine readable medium may be a storage medium. The storage unit 130 may include a non-volatile medium and a volatile medium. All of these media should be of a type that allows commands transferred by the media to be detected by a physical mechanism through which the machine reads the commands. The machine-readable medium may include, but is not limited to, at least one of a floppy disk, a flexible disk, a hard disk, a magnetic tape, a compact disc ROM (CD-ROM), an optical disk, a punch card, a paper tape, a RAM, a programmable ROM (PROM), an erasable PROM (EPROM), and a flash EPROM.

The touch screen 140 may include a display unit and provide a user with a graphic user interface for executing various functions. For example, the touch screen 140 may provide a graphic user interface for displaying icons. According to an embodiment of the present disclosure, the touch screen 140 may display a first icon area including at least one or more first icons and a second icon area including at least one or more second icons, and may display one page containing the first and second icon areas, of which at least one of a size and a position has been changed.

The touch screen 140 may receive user inputs, using various gesture inputs, including at least one proximity or touch, through a user's body, e.g., fingers, including a thumb, or a touchable input unit 158, for example, a pen. Any predetermined type of input, such as a touch, a touch and hold, a drag, or the like, that may be used in editing operations such as moving, deleting, and adding an icon may be used as the user's gesture input. The touch screen 140 may be implemented in, for example, a resistive type, a capacitive type, an infrared type, or an acoustic wave type. In an example, the touch screen 140 may include a sheet for recognizing an Electro-Magnetic (EM) device, e.g., a pen.

The input/output unit 150 may include a button 152, a microphone 154, a speaker 156, and an input unit 158. The input/output unit 150 is not limited to those elements described above, and may include a cursor controller, such as a mouse, a trackball, a joystick, and cursor directional keys, in order to control movement of a cursor on the touch screen 140 and the communication with the controller 110.

The microphone 154 may receive voice or sound involved in various sound sources to generate electric signals under the control of the controller 110. The speaker 156 may output, to the outside of the electronic device 100, sounds corresponding to various signals, e.g., a wireless signal, a broadcasting signal, a digital audio file, a digital video file, and the like, according to the communication unit 120 or the execution of the application under the control of the controller 110.

The input unit 158 may be inserted into and stored in the electronic device 100, or may be a separately configured device or object. When the input unit 158 is inserted into and stored in the electronic device 100, the input unit 158 may be withdrawn or detached from the electronic device 100. The input unit 158 may be an input means, such as a stylus pen, hereinafter, referred to as a pen, through which an input such as proximity or a touch may be made on the touch screen 140, or a user's finger. A user input may be made through the input unit 158.

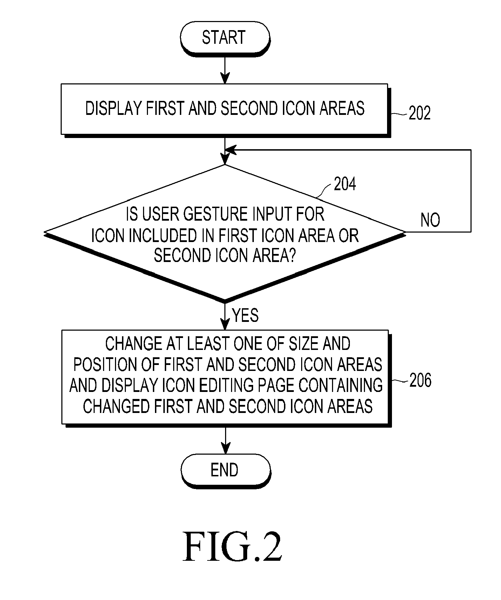

FIG. 2 is a flowchart illustrating an operation of displaying a first icon area and a second icon area in an electronic device according to an embodiment of the present disclosure.

Referring to FIG. 2, the electronic device 100 may display a first icon area and a second icon area in operation 202. According to an embodiment of the present disclosure, at least one or more first icons may be displayed in the first icon area, and at least one or more second icons may be displayed in the second icon area. The first icon area may be disposed on an upper side of a display screen, and the second icon area may be disposed on a lower side of the display screen. The count of icons which may be displayed in the second area may be limited to a predetermined number, and a fixed icon that cannot be edited, which includes being moved, deleted, or the like, may be included in the at least one or more second icons of the second icon area. The at least one or more first icons and the at least one or more second icons may be application icons, and they may be a short-cut icon. When there is a tap, and/or any other similar user input and/or user gesture, on the at least one or more first icons or the at least one or more second icons, the corresponding application may be executed.

In operation 204, the electronic device 100 may determine whether a user gesture is input for the icons included in the first icon area or the second icon area. According to an embodiment of the present disclosure, the electronic device 100 may sense a user's gesture input for any one of the at least one or more first icons included in the first icon area or for the at least one or more second icons included in the second icon area. According to an embodiment of the present disclosure, the user's gesture input may be a touch and hold input. The touch and hold input may be an action in which a user's hand or an input unit 158 touches an icon and maintains the touch on the icon for a predetermined period of time.

The electronic device 100, when sensing the user's gesture input for any one of the at least one or more first icons or the at least one or more second icons, may change at least one of a size and a position of the first and second icon areas and display a page, hereinafter, also referred to as an icon editing page, containing the first and second icon areas, of which at least one of the size and the position has been changed, in operation 206. According to an embodiment of the present disclosure, when at least one of the size and the position of the first and second icon areas is changed, at least one of a size and a position of the icons included in the first and second icon areas may also be changed.

According to an embodiment of the present disclosure, the icon editing page may include one or more pages. When the icon editing page includes a plurality of pages, the first page may be displayed, and then, the first page may be changed to the next or previous page according to a user's gesture input.

Furthermore, according to an embodiment of the present disclosure, a mini-screen representing the icon editing page may be displayed on a lower side of the icon editing page. The mini-screen may include one or more mini-pages obtained by reducing the one or more pages included in the icon editing page to mini-sized pages.

While the icon editing page is being displayed so as to contain the first and second icon areas, of which at least one of the size and the position has been changed, a user may move, add, or delete the one or more first icons and the at least one or more second icons. For example, as the icon editing page is provided in which the first and second icon areas are reduced in size and located to be close to each other, by changing of at least one of the size and position of the first and second icon areas, and therefore, when a user moves the first icons in the first icon area to the second icon area or moves the second icons in the second icon area to the first icon area, moving distances of the icons are made shorter so that the user can move the icons through a physically short movement distance.

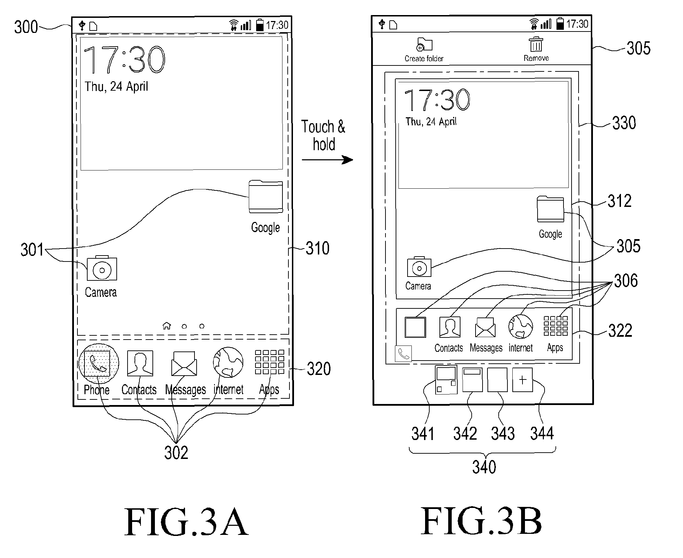

FIGS. 3A and 3B illustrate an example of a screen for displaying a first icon area and a second icon area according to an embodiment of the present disclosure.

Referring to FIG. 3A, the electronic device 100 may display a first icon area 310 and a second icon area 320 on a display screen 300. At least one or more first icons 301 may be displayed in the first icon area 310, and at least one or more second icons 302 may be displayed in the second icon area 320. The first icon area 310 may be disposed on an upper side of a display screen 300, and the second icon area 320 may be disposed on a lower side of the display screen 300. A count, or in other words a number, of icons which may be displayed in the second area 320 may be limited to a predetermined number, and a fixed icon, for example an Apps icon, which cannot be edited by being moved, deleted, or the like may be included in the at least one or more second icons 302 of the second icon area 320. When a user's gesture input, for example a touch and hold input, is sensed for any one of the at least one or more first icons 310, for example a Phone icon, or the at least one or more second icons 302, the electronic device 100 may display a display screen 305 as illustrated in FIG. 3B.

Referring to FIG. 3B, the electronic device 100 may change at least one of a size and a position of the first icon area 310 and the second icon area 320 and display an icon editing page 330 that is one page containing a first icon area 312 and a second icon area 322, at least one of a size and a position of which has been changed.

According to an embodiment of the present disclosure, when at least one of the size and the position of the first and second icon areas 310 and 320 is changed, at least one of a size and a position of the at least one or more first and second icons 301 and 302 included in the first and second icon areas, respectively may be changed.

According to an embodiment of the present disclosure, the icon editing page 330 may include one or more pages. When the icon editing page 330 includes a plurality of pages, the first page may be displayed, and then, the first page may be changed to the next or previous page according to a user's gesture input.

Furthermore, according to an embodiment of the present disclosure, a mini-screen 340 representing the icon editing page may be displayed on a lower side of the icon editing page 330. The mini-screen 340 may include one or more mini-pages 341, 342, 343, and 344, obtained by reducing the one or more pages included in the icon editing page 330 to mini-sized pages. While the icon editing page 330 is being displayed which contains the first and second icon areas 312 and 322, at least one of the size and the position of which has been changed, a user may move, add, or delete at least one or more first icons 305 and at least one or more second icons 306. For example, the at least one or more first icons 305 may be moved to the second icon area 322, at least one of the size and the position of which has been changed, or the at least one or more second icons 306 may be moved to the first icon area 312, of which at least one of the size and the position has been changed. When the icons are moved in this way on one icon editing page 330 containing the first and second icon areas 312 and 322, at least one of the size and the position of which has been changed, moving distances of the icons are made shorter so that a user can move the icons through a physically short movement distance.

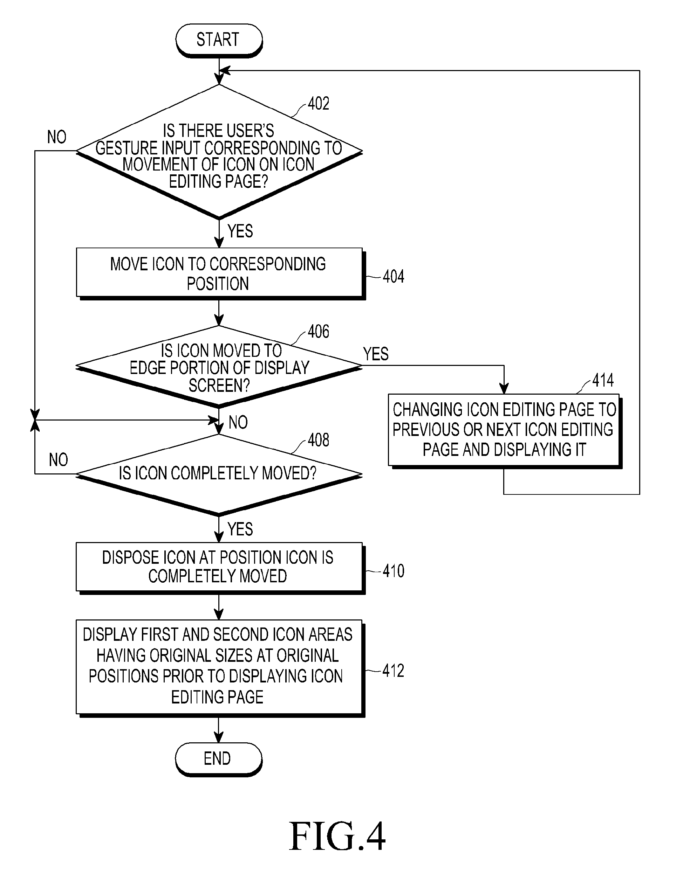

FIG. 4 is a flowchart illustrating an operation of moving an icon according to an embodiment of the present disclosure.

Referring to FIG. 4, in operation 402, the electronic device 100 may determine whether there is a user's gesture input corresponding to a movement of an icon on an icon editing page that is being displayed. According to an embodiment of the present disclosure, the user's gesture input corresponding to the movement of the icon may be a drag input for an icon selected through a touch and hold input.

When determining that there is the user's gesture input corresponding to the movement of the icon, the electronic device 100 may move the icon to the corresponding position in operation 404. According to an embodiment of the present disclosure, the electronic device 100 may move a first icon in a first icon area to a second icon area or a second icon in the second icon area to the first icon area on the icon editing page.

According to an embodiment of the present disclosure, when the number of icons included in the second icon area varies depending on the movement of the second icon in the second icon area to the first icon area or on the movement of the first icon in the first icon area to the second icon area, the electronic device 100 may change a gap between the icons left in the second icon area to display them. For example, when the number of icons included in the second icon area is decreased or increased, the electronic device 100 may display the icons left in the second icon area such that a gap between them becomes wider or narrower.

According to an embodiment of the present disclosure, when a mini-screen representing the icon editing page is displayed on a lower side of the icon editing page, if the electronic device 100 moves the first icon in the first icon area to a mini-page within the mini-screen, the first icon may move to a page corresponding to the mini-page. Furthermore, if the electronic device 100 moves the second icon in the second icon area to a mini-page within the mini-screen, the second icon may move to a page corresponding to the mini-page.

According to an embodiment of the present disclosure, for the moving icon, the electronic device 100 may represent that the icon is moving. For example, the electronic device 100 may make the moving icon translucent, change a color of the moving icon, or change the size of the moving icon, and then display the moving icon.

According to an embodiment of the present disclosure, the electronic device 100 may display the moving icon along with an original position of the moving icon. For example, the electronic device 100 may display a shape of the corresponding icon at the original position of the moving icon.

According to an embodiment of the present disclosure, when there exists another icon at the position where the icon has moved, the positions of the moved icon and the existing icon may be changed with each other. In operation 406, the electronic device 100 may determine whether the icon has moved to an edge portion of a display screen.

When it is determined that the icon has moved to the edge portion of the display screen in operation 406, the electronic device 100 may change the icon editing page to a previous or next icon editing page to display the editing page in operation 414. According to an embodiment of the present disclosure, the electronic device 100 may display the next icon editing page when the icon has moved to a right-edge portion of the display screen and the previous icon editing page when the icon has moved to a left-edge portion of the display screen. According to an embodiment of the present disclosure, when a previous or next icon editing page does not exist, the electronic device 100 may continuously display the current icon editing page. The electronic device 100, after changing the icon editing page to the previous or next icon editing page, may return to operation 402.

Meanwhile, when it is determined that the icon has not moved to the edge portion of the display screen in operation 406, then in operation 408, the electronic device 100 may determine whether the icon is completely moved. According to an embodiment of the present disclosure, when the drag input for the icon is stopped and the touch and hold is released, the electronic device 100 may determine that the icon is completely moved. When the icon is completely moved, the electronic device 100 may dispose the icon at the position where the movement has been made, in operation 410. In operation 412, the electronic device 100 may display the first and second icon areas having the original sizes at the original positions prior to displaying the icon editing page.

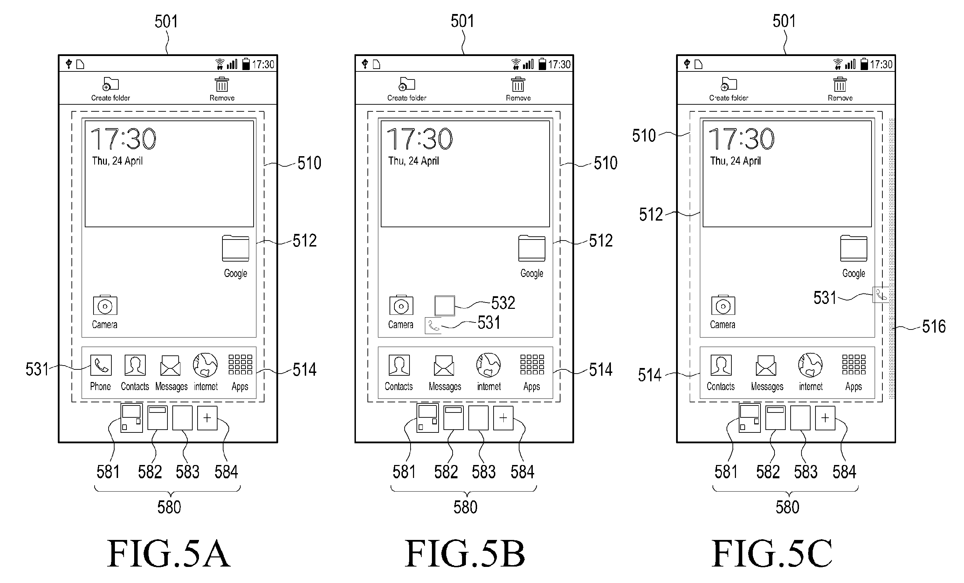

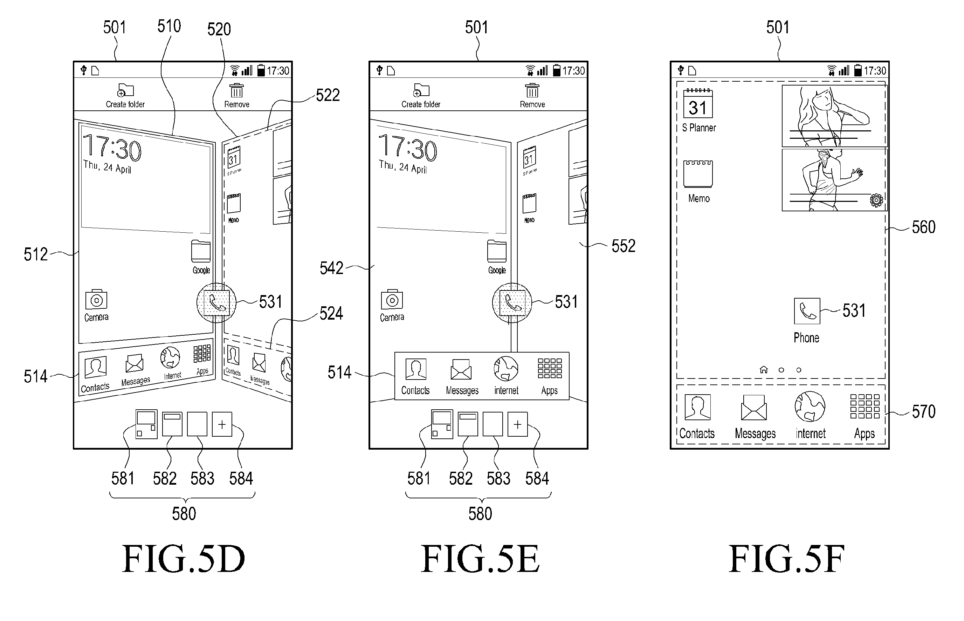

FIGS. 5A, 5B, 5C, 5D, 5E, and 5F illustrate an example of a screen when an icon is moved according to an embodiment of the present disclosure.

Referring to FIGS. 5A, 5B, 5C, 5D, 5E, and 5F, an icon 531 in a second icon area 514 may move to a first icon area 512.

As illustrated in FIG. 5A, the electronic device 100 may display an icon editing page 510 on a display screen 501.

According to an embodiment of the present disclosure, a mini-screen 580, representing the reduced form of the icon editing page 510, may be displayed on a lower side of the icon editing page 510. The mini-screen 580 may include one or more mini-pages 581, 582, 583, and 584 obtained by reducing one or more pages included in the icon editing page 510 to mini-sized pages.

When there is a user's gesture input, e.g., a drag input, corresponding to a movement of the icon 531 in the second icon area 514 to the first icon area 512 while the icon editing page 510 is being displayed, the electronic device 100 may move the icon 531 to a position 532 in the first icon area 512, where the drag is completed, as illustrated in FIG. 5B.

According to an embodiment of the present disclosure, when there is a user's gesture input corresponding to a movement of the icon 531 in the second icon area 514 to the mini-page 581 within the mini-screen 580, the electronic device 100 may move the icon 531 to the editing page 510 corresponding to the mini-page 581. According to an embodiment of the present disclosure, for the icon 531 that is moving, the electronic device 100 may represent that the icon is moving. For example, the electronic device 100 may make the icon 531 translucent, change a color of the icon 531, or change a size of the icon 531, and then display the icon 531 that is moving.

According to an embodiment of the present disclosure, when the number of icons included in the second icon area 514 is reduced due to the movement of the icon 531 in the second icon area 514, the electronic device 100 may display the icons left in the second icon area such that a gap between them becomes wider. According to an embodiment of the present disclosure, the electronic device 100 may display, at the original position of the icon 531 that is moving, a shape representing where the icon 531 that is moving was located.

The electronic device 100 may determine whether the icon 531 has moved to an edge portion of the display screen 501. When the icon 531 has moved to the edge portion of the display screen 501, as illustrated in FIG. 5C, the electronic device 100 may display, at the edge portion, a highlight 516 for informing that there is a next icon editing page, and may change the icon editing page 510 to the next icon editing page and display the icon editing page 510.

Meanwhile, when changing the icon editing page 510 to a next icon editing page 520 to be displayed, as illustrated in FIG. 5D, the electronic device 100 may change the icon editing page 510, including both the first icon area 512 and the second icon area 514, to the next icon editing page 520 to be displayed. According to an embodiment of the present disclosure, in the process of changing the icon editing page 510 to the next icon editing page 520, as illustrated in FIG. 5D, a next first icon editing page 522 corresponding to the first icon area 512 and a next second icon area 524 identical to the second icon area 514 of the icon editing page 510 may be displayed on the next icon editing page 520.

Furthermore, as illustrated in FIG. 5E, when the electronic device 100 changes an icon editing page 542 including the first icon area 512 and the second icon area 514 to a next icon editing page 552 to be displayed, only a next first icon area 522 corresponding to a next page of the first icon area 512 may be included in the next icon editing page 552, and the second icon area 514 may be displayed at a fixed position, e.g., on a lower side of the display screen, to be separate from the next icon editing page 552.

The electronic device 100, after changing the icon editing page 510 to the next icon editing page 520 to be displayed, may move the icon 531 to the next icon editing page 520. When the icon is completely moved, the electronic device 100 may dispose the icon at the position where the movement has been made, and as illustrated in FIG. 5F, may display a first icon area 560 and a second icon area 570, having the original sizes and positions before the change, on the display screen 501.

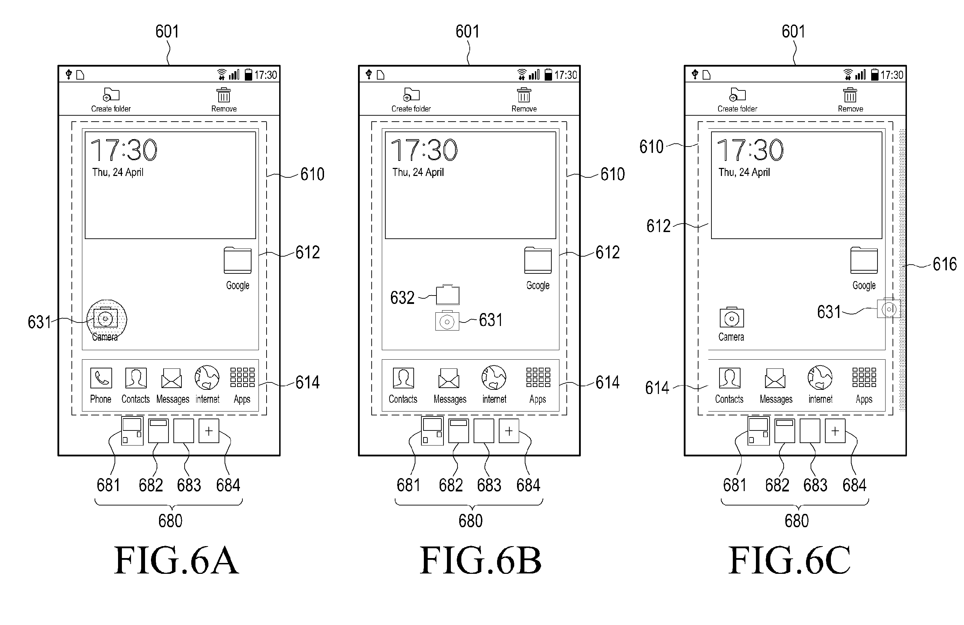

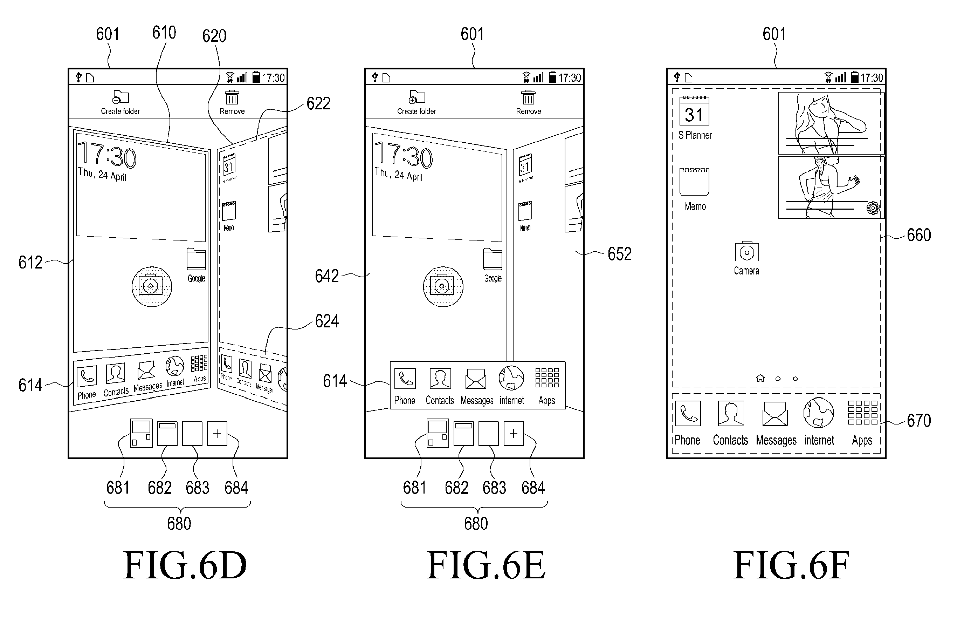

FIGS. 6A, 6B, 6C, 6D, 6E, and 6F illustrate an example of a screen when an icon is moved according to an embodiment of the present disclosure.

Referring to FIGS. 6A, 6B, 6C, 6D, 6E, and 6F, an icon 631 in a first icon area 612 may move within the first icon area 612.

As illustrated in FIG. 6A, the electronic device 100 may display an icon editing page 610 on a display screen 601. According to an embodiment of the present disclosure, a mini-screen 680 representing the reduced form of the icon editing page 610 may be displayed on the lower side of the icon editing page 610. The mini-screen 680 may include one or more mini-pages 681, 682, 683, and 684, obtained by reducing one or more pages included in the icon editing page 610 to mini-sized pages.

When there is a user's gesture input, such as a drag input, corresponding to a movement of the icon 631 within the first icon area 612 while the icon editing page 610 is being displayed on the display screen 601, the electronic device 100 may move the icon 631 to a position 632 in the first icon area 612, where the drag is completed, as illustrated in FIG. 6B.

According to an embodiment of the present disclosure, for the icon 631 that is moving, the electronic device 100 may represent that the icon 631 is moving. For example, the electronic device 100 may make the icon 631 translucent, change a color of the icon 631, or change a size of the icon 631, and then display the icon 631 that is moving.

According to an embodiment of the present disclosure, the electronic device 100 may display, at the original position of the icon 631 that is moving, a shape representing where the icon 631 was located.

The electronic device 100 may determine whether the icon 631 has moved to an edge portion of the display screen 601. When the icon 631 has moved to the edge portion of the display screen 601, as illustrated in FIG. 6C, the electronic device 100 may display, at the edge portion, a highlight 616 for informing that there is a next icon editing page, and may change the icon editing page 610 to the next icon editing page and display the icon editing page 610.

Meanwhile, when changing the icon editing page 610 to a next icon editing page 620 to be displayed, as illustrated in FIG. 6D, the electronic device 100 may change the icon editing page 610, including both the first icon area 612 and the second icon area 614, to the next icon editing page 620, including both a first icon area 622 and a second icon area 624, to be displayed. Furthermore, as illustrated in FIG. 6E, the electronic device 100 may change an icon editing page 642, including only the first icon area 612 from among the first and second icon areas 612 and 614, to a next icon editing page 652 to be displayed, and may display the second icon area 614 as it is. The electronic device 100, after changing the icon editing page 610 to the next icon editing page to display it, may move the icon 631 to the next icon editing page. When the icon 631 is completely moved, the electronic device 100 may dispose the icon 631 at the position where the movement has been made, and as illustrated in FIG. 6F, may display first and second icon areas 660 and 670, having the original sizes and positions before the change, on the display screen 601.

The methods according to various embodiments of the present disclosure may be implemented in a form of program commands executed through various computer means to be recorded in a computer readable medium. The computer readable medium may include a program command, a data file, a data structure, and the like, independently or in combination. The program instructions recorded in the medium may be specially designed and configured for the present disclosure, or may be known to and usable by those skilled in the field of computer software.

It will be appreciated that the photographing method according to the present disclosure may be implemented in the form of hardware, software, or a combination of hardware and software. Any such software may be stored, for example, in a volatile or non-volatile storage device such as a ROM, a memory such as a RAM, a memory chip, a memory device, a memory, an integrated circuit (IC), or a recordable optical or magnetic medium such as a CD, a DVD, a magnetic disk, or a magnetic tape, regardless of its ability to be erased or its ability to be re-recorded. It can be also appreciated that the memory included in the mobile terminal is one example of machine-readable devices suitable for storing a program including instructions that are executed by a processor device to thereby implement embodiments of the present disclosure. Accordingly, the present disclosure includes a program for a code implementing the apparatus and method described in the appended claims of the specification and a machine-readable storage medium, such as a computer or the like, for storing the program. Further, the program may be electronically transferred by a predetermined medium such as a communication signal transferred through a wired or wireless connection, and the present disclosure appropriately includes equivalents of the program.

Furthermore, the mobile electronic device according to the various embodiments of the present disclosure may receive and store the program from a program providing device connected thereto in a wired or wireless manner. The program providing device may include a memory for storing programs including instructions allowing the user interface methods according to the various embodiments of the present disclosure to be performed, a communication unit for performing wired or wireless communication with the mobile electronic device, and a controller for controlling the corresponding program to be transmitted through the communication unit according to a request of the mobile electronic device or automatically.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a touch screen configured to display a first icon area, a second icon area, and an icon editing page; and
a controller configured to change the first icon area and the second icon area to be displayed in the icon editing page as the changed first icon area and the changed second icon area.

2. The electronic device of claim 1,
wherein the first icon area and the second icon area are separated from each other,
wherein the controller is further configured to:
change respective sizes of the first icon area and the second icon area, and
change a position of the second icon area according to a user's gesture input.

3. The electronic device of claim 2, wherein the position of the second icon area is changed to be closer to the position of the first icon area.

4. The electronic device of claim 1, wherein the controller is further configured to move an icon contained in one of the changed first icon area and the changed second icon area according to an input corresponding to the movement of the icon.

5. The electronic device of claim 4, wherein the controller, if the icon is completely moved, is further configured to display the first icon area and the second icon area that have original sizes and positions before displaying the icon editing page.

6. The electronic device of claim 5, wherein the controller is further configured to display that the icon is moving when the icon is moving, wherein the controller is further configured to display the moving icon by at least one of making the moving icon translucent, changing a color of the moving icon, or changing a size of the moving icon.

7. The electronic device of claim 4, wherein the controller is further configured to display a shape of the corresponding moving icon at an original position of the moving icon.

8. The electronic device of claim 4, wherein the controller is further configured to move a first icon contained in the changed first icon area to the changed second icon area or to move a second icon contained in the changed second icon area to the changed first icon area.

9. The electronic device of claim 4, wherein the controller is further configured to display both the changed first icon area and the changed second icon area while the icon is moving from one of the changed first icon area and the changed second icon area to the other of the changed first icon area and the changed second icon area.

10. The electronic device of claim 7, wherein the controller is further configured to display at least one or more icons left in the second icon area such that a gap between the icons is changed, when the number of icons contained in the second icon area is varied.

11. The electronic device of claim 1, wherein the controller is further configured to display a mini-screen on a lower side of the icon editing page, the mini-screen containing at least one mini-page for at least one page contained in the icon editing page.

12. The electronic device of claim 11, wherein the controller, when an icon contained in the icon editing page moves to the mini-page within the mini-screen, is further configured to move the icon to a page corresponding to the mini-page.

13. The electronic device of claim 4, wherein the controller is further configured to change the icon editing page to a next icon editing page and display the next editing page when the icon moves to an edge portion of the touch screen.

14. A method of editing an icon in an electronic device, the method comprising:
displaying a first icon area and a second icon area;
changing the first icon area and the second icon area according to a user's gesture input; and
displaying an icon editing page containing the changed first icon area and the changed second icon area.

15. The method of claim 14, wherein the changing of the first icon area and the second icon area comprises:
changing respective sizes of the first icon area and the second icon area, which are separated from each other, according to the user's gesture input; and
changing a position of the second icon area.
